# EUROPÄISCHE PATENTSCHRIFT

(11) **EP 1 770 337 B1**
(45) Veröffentlichungstag und Bekanntmachung des Hinweises auf die Patenterteilung: **23.07.2014**
(21) Anmeldenummer: 06019306.7
(22) Anmeldetag: 15.09.2006
(51) Int. Cl.: F24D 3/14

(54) **Noppenplatte mit Zwischennoppen**
Panel with protrusions comprising intermediate protrusions
Dalle à plots avec des plots intermédiaires

(30) Priorität: 28.09.2005 DE 202005015163 U
(43) Veröffentlichungstag der Anmeldung: 04.04.2007
(73) Patentinhaber: Wischemann Kunststoff GmbH, 48607 Ochtrup (DE)
(72) Erfinder: Ossendorf, Stefan, Hubert, 48607 Ochtrup (DE)
(74) Vertreter: Habbel, Ludwig

(56) Entgegenhaltungen:
- EP-A- 0 637 720
- DE-A1- 3 317 131
- DE-C1- 19 936 801
- FR-A1- 2 746 426

## Beschreibung

Die Erfindung betrifft eine Noppenplatte nach dem Oberbegriff des Anspruchs 1.

Aus der DE 33 17 131 A sind derartige Noppenplatten bekannt. Sie dienen zur Aufnahme von Fußboden-Heizungsrohren und mit Noppen versehen, die an ihrem Umfang, im Vertikalschnitt gesehen, Hinterschneidungen zur Halterung von Heizungsrohren aufweisen und in einem regelmäßigen, quadratischen Raster angeordnet sind. Dabei bilden jeweils vier im Quadrat angeordnete Noppen eine Noppengruppe. Im mittleren Bereich jeder Noppengruppe ist ein Zwischennoppen angeordnet, welcher kleiner ist als die Noppen. Auch die Zwischennoppen weisen, im Vertikalschnitt gesehen, Hinterschneidungen zur Halterung von Heizungsrohren auf. Im Vergleich zu der Möglichkeit, Heizungsrohre mit Hilfe spezieller Halteklammern auf einer glattflächigen Bodenplatte zu befestigen, ermöglichen die gattungsgemäßen Noppenplatten die einfache, werkzeuglose Verlegung der Heizungsrohre, da die Handhabung der separaten U-förmigen Halteklammern entfällt, welche ansonsten mit ihren beiden freien Enden über ein Heizungsrohr geführt und in die Bodenplatte eingetrieben werden müssten.

Der Erfindung liegt die Aufgabe zugrunde, eine gattungsgemäße Noppenplatte dahingehend zu verbessern, dass diese sowohl die Längs- und Quer- als auch eine Diagonalverlegung der Heizungsrohre ermöglicht und zwar für möglichst unterschiedliche Heizungsrohrdurchmesser.

Diese Aufgabe wird durch eine Noppenplatte mit den Merkmalen des Anspruchs 1 gelöst.

Die Erfindung schlägt mit anderen Worten vor, in den beiden Richtungen, die parallel zu den Kanten der Quadrate verlaufen, die Noppen so weit von den Zwischennoppen zu beabstanden, dass sie die Aufnahme von Heizungsrohren ermöglichen, so dass jedem Heizungsrohr auf der einen Seite jeweils Noppen und auf der anderen Seite jeweils Zwischennoppen anliegen. Dabei ist vorschlagsgemäß weiterhin vorgesehen, dass in den beiden Richtungen, die parallel zu den Diagonalen der Quadrate verlaufen, die Noppen so weit voneinander beabstandet sind, dass sie die Aufnahme von Heizungsrohren ermöglichen, so dass jedem Heizungsrohr auf beiden Seiten jeweils Noppen anliegen, welche entlang dem Heizungsrohr gesehen abwechselnd auf der einen und der anderen Seite versetzt angeordnet sind.

Bei einer Diagonalverlegung verlaufen die Heizungsrohre mit unterschiedlichen Abständen zueinander, wobei die kleineren Zwischennoppen ermöglichen, dass jeweils zwei Heizungsrohre besonders nahe benachbart verlaufen. Ein solches Paar von nah benachbarten Heizungsrohren ist von dem nächsten Paar durch die größeren Noppen weiter beabstandet. Bei entsprechender Dimensionierung der Noppen und des Rastermaßes kann dabei ein Verlegeabstand erzielt werden, der im Mittel etwa einem gleichmäßigen Verlegeabstand von 50 mm entspricht, was für viele wärmetechnischen Berechnungen ein in der Praxis gängiges Verlegeraster darstellt.

Wenn die Heizungsrohre gebogen verlaufen, erleichtern die Zwischennoppen im Vergleich zu einer nur die hauptsächlichen Noppen aufweisenden Noppenplatte die Verlegung der Heizungsrohre in unterschiedlichen Biegeradien, da sie zusätzliche Führungsflächen für die Heizungsrohre schaffen.

Vorteilhaft können die Zwischennoppen einen kreisrunden horizontalen Querschnitt aufweisen. Durch diese einfache Geometrie wird eine einfache und wirtschaftliche Herstellung der zur Fertigung der Zwischennoppen erforderlichen Werkzeuge ermöglicht.

Wenn die Zwischennoppen nicht nur im Bereich ihres Schaftes, sondern auch im Bereich ihres Kopfes einen kreisrunden horizontalen Querschnitt aufweisen, also in Art eines ringsum verlaufenden über den Schaft radial vorstehenden Kragens, wird ein sicherer Halt des Rohres an diesen Zwischennoppen auch bei den unterschiedlichsten Verlegerichtungen ermöglicht, insbesondere, wenn die Zwischennoppen beispielsweise bei Rohrbiegungen als zusätzliche Abstützelemente dienen.

Eine besonders wirtschaftliche Herstellung der zur Fertigung der Zwischennoppen erforderlichen Werkzeuge kann allerdings ermöglicht werden, indem die Zwischennoppen im Kopfbereich in an sich bekannter Weise mehrere - z. B. vier - einzelne Vorsprünge aufweisen. Insbesondere wenn diese Vorsprünge um 45° versetzt zu den vergleichbaren Vorsprüngen ausgerichtet sind, welche die größeren Noppen aufweisen, sichern die Zwischennoppen zuverlässig mittels ihrer Hinterschneidungen Rohre, die diagonal zum Raster der Noppen verlaufen.

Die Dimensionierung des Rastermaßes der Noppen sowie die Durchmesser der einzelnen Noppen und der Zwischennoppen können vorteilhaft so gewählt werden, dass aufgrund der erfindungsgemäßen Noppenanordnung die Aufnahme von Heizungsrohren unterschiedlichster Durchmesser mit derselben Noppenplatte möglich ist. So können beispielsweise Heizungsrohre mit Durchmessern zwischen 14 und 20 mm von derselben Noppen-platte gehalten werden. Es ist daher hinsichtlich der Produktion und Lagerhaltung besonders vorteilhaft möglich, mit nur einem einzigen Typ von Noppenplatte die Verlegung unterschiedlich großer Heizungsrohre zu ermöglichen, ohne dass jeweils speziell angepasste Noppenplatten erforderlich wären.

Eine besonders zuverlässige Verlegung mehrerer Noppenplatten, die gemeinsam eine großflächige Unterlage für Heizungsrohre schaffen sollen, kann durch einen mechanischen Verbund zwischen den einzelnen Noppenplatten erfolgen. Dabei geht der vorliegende Vorschlag davon aus, dass die Noppen in an sich bekannter Weise hohl sind, beispielsweise indem die Noppenplatte im Tiefziehverfahren aus einer ebenen Materialplatte geformt ist. Zur Erzielung des mechanischen Verbunds kann vorgesehen sein, an zwei von vier Rändern einer rechteckigen Noppenplatte in dem regelmäßigen Raster, in dem die größeren Noppen vorgesehen sind, kleinere Verbindungsnoppen anzuordnen, so dass entlang dieser Ränder die jeweils benachbarte Noppenplatte mit ihren größeren, hohlen Noppen auf die kleinen Verbindungsnoppen aufgesteckt werden kann. Der mechanische Verbund sichert die Platten gegen Relativbewegungen und Verschiebungen, so dass eine präzise Beibehaltung des Rasters auch über sehr große Bodenflächen hinweg gewährleistet werden kann und eine dementsprechend problemlose Verlegung der Heizungsrohre in einem vorgegebenen Verlegemuster erfolgen kann.

Die Herstellung der Noppenplatte kann vereinfacht werden, indem die kleineren Verbindungsnoppen genauso geformt sind wie die Zwischennoppen, so dass bei der Herstellung des Formwerkzeugs lediglich zwei unterschiedliche Noppentypen zu berücksichtigen sind, nämlich der Grund- oder Hauptnoppentyp einerseits, und der Zwischen- und Verbindungsnoppentyp andererseits. Falls an den Zwischennoppen Hinterschneidungen vorgesehen sind, kann dies mittels entsprechender Aufsätze bei dem zur Herstellung der Noppenplatte erforderlichen Werkzeug verwirklicht werden, so dass wahlweise Zwischennoppen mit oder ohne Hinterschneidungen herstellbar sind und der Schaft einer Zwischennoppe dem einer Verbindungsnoppe gleicht.

Ein Ausführungsbeispiel der Erfindung wird anhand der rein schematischen Darstellungen nachfolgend näher erläutert. Dabei zeigt
- Fig. 1: eine perspektivische Ansicht auf einen Ausschnitt einer Noppenplatte,
- Fig. 2: eine Draufsicht auf einen größeren Ausschnitt der Noppenplatte von Fig. 1, mit in einer ersten Richtung verlegten Heizungsrohren, und
- Fig. 3: eine Ansicht ähnlich Fig. 2, wobei die Heizungsrohre jedoch auf eine andere Verlegeart angeordnet sind.

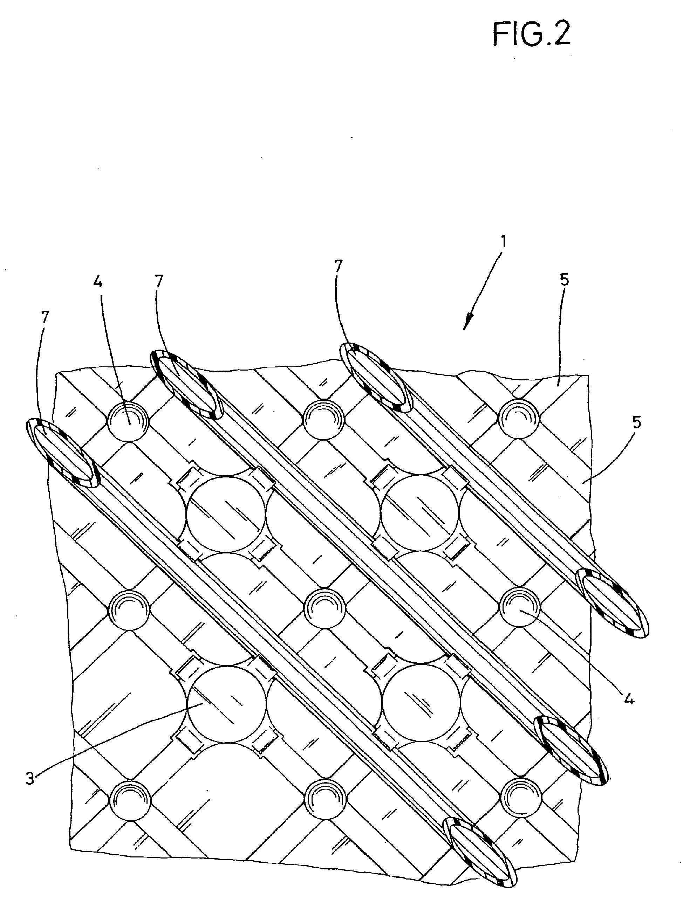

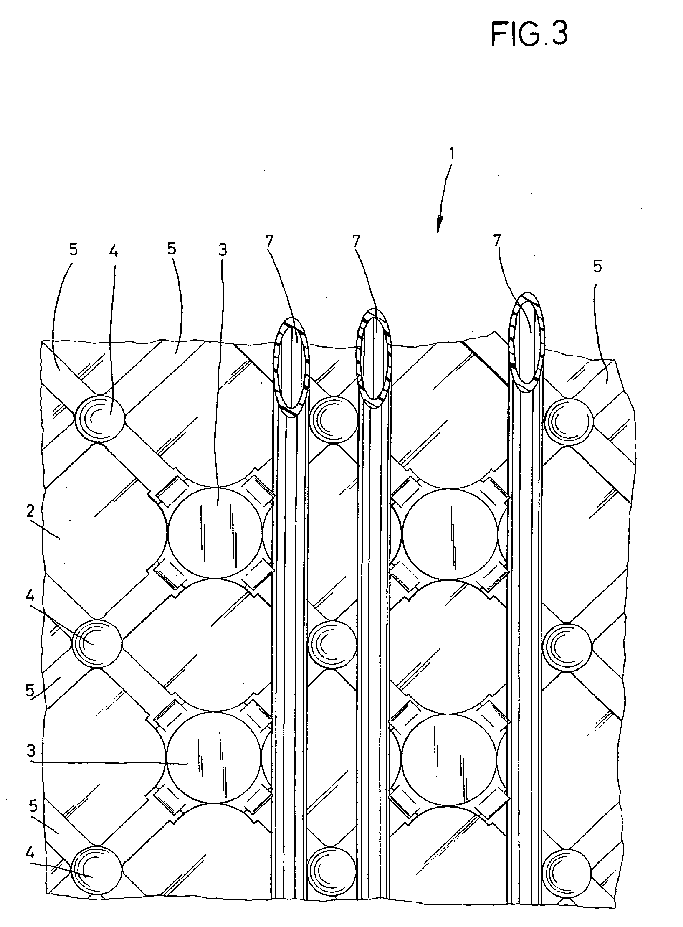

In den Zeichnungen ist mit 1 jeweils insgesamt eine Noppenplatte bezeichnet, die jeweils nur ausschnittsweise dargestellt ist und eine Grundfläche 2 aufweist, Noppen 3 sowie Zwischennoppen 4. Die Noppen 3 sind, wie insbesondere aus den Fig. 2 und 3 ersichtlich ist, in einem quadratischen Raster angeordnet, so dass jeweils vier derartige Noppen 3 eine Noppengruppe bilden. Im Mittelpunkt einer derartigen Noppengruppe befindet sich jeweils eine Zwischennoppe 4, und sowohl die Noppen 3 als auch die Zwischennoppen 4 sind auf Rippen 5 angeordnet, die als Kreuz und quer über die Grundfläche 2 verlaufende Erhebungen ausgeprägt sind.

Die gesamte Noppenplatte 1 besteht aus einem einzigen, aus Kunststoff bestehenden Tiefziehteil, so dass sowohl die Rippen als auch die Noppen 3 und Zwischennoppen 4 jeweils hohl sind.

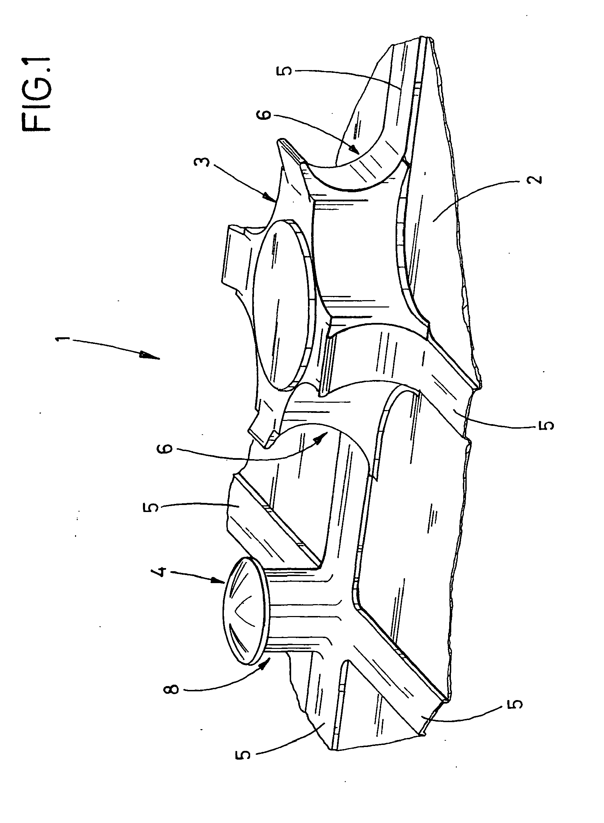

Wie Fig. 1 erkennen lässt, weisen die Noppen 3 in vertikaler Richtung Hinterschneidungen 6 auf, so dass in einer ersten Verlegerichtung, wie sie aus Fig. 2 ersichtlich ist, Heizungsrohre 7 parallel zu den Rippen 5 verlegt werden können und dabei von den Noppen 3 sicher gehalten werden, da die Heizungsrohre 7 in die Hinterschneidungen 6 der Noppen 3 eintauchen.

Die Rippen 5 verlaufen in einem Rastermaß von etwa 75 mm, so dass zwei auf derselben Rippe 5 angeordnete Noppen 3 in einem Rastermaß von etwa 150 mm angeordnet sind. Für die Heizungsrohre 7 ergibt sich bei einer parallelen Verlegeart, wie sie auch in Fig. 2 dargestellt ist, ein Parallelabstand von ebenfalls etwa 75 mm.

Gemäß einer zweiten Verlegeart, die in Fig. 3 erläutert ist, verlaufen die Heizungsrohre 7 diagonal zu den Rippen 5. Auch hier bewirken die Hinterschneidungen 6, obwohl die Heizungsrohre nicht vollständig in die Hinterschneidungen 6 eintauchen, einen zuverlässigen Halt der Heizungsrohre 7. Die Heizungsrohre 7 verlaufen bei dieser diagonalen Verlegeart in unterschiedlichen Abständen, wobei die näher benachbarten Heizungsrohre 7 in einem Raster von etwa 40 mm und die weiter voneinander beabstandeten Heizungsrohre in einem Raster von etwa 70 mm verlaufen, so dass sich hier im rechnerischen Mittel eine Verlegedichte von nahe an 50 mm Rohrleitungsabstand ergibt, was für viele in der Praxis übliche Berechnungsverfahren vorteilhaft ist.

Der enge Verlegeabstand bei der Diagonalverlegung gemäß Fig. 3 wird durch die Zwischennoppen 4 ermöglicht, die - wie aus Fig. 1 ersichtlich ist - im Vertikalschnitt etwa pilzförmig geformt sind und daher ebenfalls eine Hinterschneidung ausbilden, die mit 8 bezeichnet ist und zum sicheren Halt der Heizungsrohre 7 beiträgt.

Abgesehen von den beiden in den Fig. 2 und 3 dargestellten Verlegemöglichkeiten für die Heizungsrohre 7 ermöglichen die Zwischennoppen 4 eine unterschiedliche Verlegung der Heizungsrohre 7, wenn die Heizungsrohre 7 in einem gebogenen, kurvigen Verlauf angeordnet werden sollen. Die Zwischennoppen 4 bieten hier zusätzlich zu den eigentlichen Noppen 3 Abstützflächen, so dass die Heizungsrohre 7 den Zwischennoppen 4 mit ihrem Kurvenäußeren oder mit ihrem Kurveninneren anliegen können. Die Hinterschneidungen 8 der Zwischennoppen 4 ermöglichen bei diesen Kurvenverläufen eine zusätzliche und zuverlässige Fixierung der Heizungsrohre 7.

Dadurch, dass die Zwischennoppen 4 einen kreisrunden horizontalen Querschnitt aufweisen und ringsum die Hinterschneidung 8 ausbilden, ist bei den unterschiedlichsten Verlegearten und Verläufen der Heizungsrohre 7 die zusätzliche Abstütz- und Haltewirkung durch die Zwischennoppen 4 ermöglicht.

## Patentansprüche

1. Noppenplatte (1) zur Aufnahme von Fußboden-Heizungsrohren (7),
mit Noppen (3), die an ihrem Umfang, im Vertikalschnitt gesehen, Hinterschneidungen (3) zur Halterung von Heizungsrohren (7) aufweisen,
und die in einem regelmäßigen, quadratischen Raster angeordnet sind,
wobei jeweils vier im Quadrat angeordnete Noppen (3) eine Noppengruppe bilden,
wobei im mittleren Bereich jeder Noppengruppe ein Zwischennoppen (4) angeordnet ist, welcher kleiner ist als die Noppen (3),
und auch die Zwischennoppen (4), im Vertikalschnitt gesehen, Hinterschneidungen (8) zur Halterung von Heizungsrohren (7) aufweisen,
**dadurch gekennzeichnet,**
**dass** in den beiden parallel zu den Kanten der Quadrate verlaufenden Richtungen die Noppen (3) die Aufnahme von Heizungsrohren (7) ermöglichend von den Zwischennoppen (4) beabstandet sind,
derart, dass jedem Heizungsrohr (7) auf der einen Seite jeweils Noppen (3) und auf der anderen Seite jeweils Zwischennoppen (4) anliegen,
und **dass** in den beiden parallel zu den Diagonalen der Quadrate verlaufenden Richtungen die Noppen (3) die Aufnahme von Heizungsrohren (7) ermöglichend voneinander beabstandet sind,
derart, dass jedem Heizungsrohr (7) auf beiden Seiten jeweils Noppen (3) anliegen, welche entlang dem Heizungsrohr (7) gesehen abwechselnd auf der einen und der anderen Seite versetzt angeordnet sind.

2. Noppenplatte nach Anspruch 1, **dadurch gekennzeichnet, dass** die Zwischennoppen (4), im Horizontalschnitt gesehen, einen kreisrunden Querschnitt aufweisen.

3. Noppenplatte nach Anspruch 1 oder 2, **dadurch gekennzeichnet, dass** die Zwischennoppen (4) die Hinterschneidungen (8) schaffende Vorsprünge aufweisen, welche um 45° versetzt zu vergleichbaren Vorsprüngen der Noppen (3) ausgerichtet sind.

4. Noppenplatte nach einem der vorhergehenden Ansprüche, **dadurch gekennzeichnet, dass** das Rastermaß und die Durchmesser der einzelnen Noppen (3) und Zwischennoppen (4) zur Aufnahme von Heizungsrohren (7) mit wahlweise zwischen 14 und 20 mm Durchmesser ausgestaltet sind.

5. Noppenplatte nach einem der vorhergehenden Ansprüche, **gekennzeichnet durch** einen rechteckigen Zuschnitt der Noppenplatte (1),
wobei an zwei von vier Rändern der Noppenplatte (1) kleinere Verbindungsnoppen angeordnet sind,
und die Noppen (3) hohl ausgeformt sind, derart, dass gleichartige Noppenplatten (1) mit ihren Noppen (3) auf die Verbindungsnoppen aufsteckbar sind und einen mechanischen Verbund der Noppenplatten (1) bilden.

## Claims

1. Knobbed board (1) for positioning underfloor-heating pipes (7), with knobs (3) which, when viewed in vertical section, have undercuts (3) on their circumference for fixing heating pipes (7), and which are arranged in a regular square pattern, where four knobs (3) arranged in a square form a knob group, where in the centre area of each knob group an intermediate knob (4) is arranged which is smaller than the knobs (3), and where intermediate knobs (4), when viewed in vertical section, also have undercuts (8) on their circumference for fixing heating pipes (7), **characterised in that** the knobs (3) running in the two directions parallel to the edges of the squares are located at a distance from one another, thereby permitting heating pipes (7) to be positioned, in such a way that the knobs (3) lie against one side and intermediate knobs (4) lie against the other side of each heating pipe (7), and that in the two directions parallel to the diagonals of the squares, the knobs (3) are located at a distance from one another, thereby permitting heating pipes (7) to be positioned, in such a way that the knobs (3) lie against both sides of each heating pipe (7), which, looking along the heating pipe (7), are arranged in an offset pattern on alternate sides of the heating pipe (7).

2. Knobbed board in accordance with claim 1, **characterised in that** the intermediate knobs (4) have a circular cross-section when viewed in horizontal section.

3. Knobbed board in accordance with claim 1 or claim 2, **characterised in that** the intermediate knobs (4) have projections forming the undercuts (8) which are offset by 45° to the similar projections on the knobs (3).

4. Knobbed board in accordance with any of the aforementioned claims, **characterised in that** the grid dimensions and the diameters of the individual knobs (3) and intermediate knobs (4) are selected in such a way as to allow the fixing of heating pipes (7) with diameters of between 14 and 20 mm.

5. Knobbed board in accordance with any of the aforementioned claims, **characterised by** a rectangular shape of the knobbed board (1) where smaller connecting knobs are arranged on two of the four edges of the knobbed board (1) and that the knobs (3) are hollow, thereby allowing the knobs (3) of similar knobbed boards (1) to be pushed onto the connecting knobs, thereby forming a mechanical joint between the knobbed boards (1).

## Revendications

1. Plaque à excroissances (1) destinée à recevoir des tuyaux de chauffage (7) au sol, comportant des excroissances (3) dont le développement présente, lorsque observé en coupe verticale, des contre-dépouilles (3) servant de fixation à des tuyaux de chauffage (7), et qui sont agencées selon une trame régulière carrée, sachant que quatre excroissances (3) agencées chaque fois en carré forment un groupe d'excroissances, sachant que dans la zone médiane de chaque groupe d'excroissances est agencée une excroissance intermédiaire (4) de taille inférieure à celle des excroissances (3), et que les excroissances intermédiaires (4) présentent, lorsque observées en coupe verticale, des contre-dépouilles (8) servant à retenir des tuyaux de chauffage (7), **caractérisée en ce que**, dans les deux sens ayant un tracé parallèle aux bords des carrés, les excroissances (3) se trouvent à distance des excroissances intermédiaires (4) pour permettre de recevoir des tuyaux de chauffage (7) de sorte que contre chaque tuyau de chauffage (7) appliquent d'un côté des excroissances (3) et de l'autre des excroissances intermédiaires (4), et **en ce que** dans les deux sens ayant un tracé parallèle aux diagonales des carrés les excroissances (3) se trouvent à distance les unes des autres pour permettre de recevoir des tuyaux de chauffage (7) de sorte que contre chaque tuyau de chauffage (7) appliquent des deux côtés des excroissances (3) agencées, lorsque observées le long du tuyau de chauffage (7), décalées les unes par rapport aux autres sur l'un et l'autre côté.

2. Plaque à excroissances selon la revendication 1, **caractérisée en ce que** les excroissances intermédiaires (4) présentent, lorsque observées en coupe horizontale, une section circulaire.

3. Plaque à excroissances selon la revendication 1 ou 2, **caractérisée en ce que** les excroissances intermédiaires (4) présentent les saillies créant des contre-dépouilles orientées décalées à 45° vers des saillies correspondantes sur les excroissances (3).

4. Plaque à excroissances selon l'une des revendications précédentes, **caractérisée en ce que** la cote modulaire et les diamètres des différentes excroissances (3) et excroissances intermédiaires (4) sont configurées pour recevoir des tuyaux de chauffage (7) présentant au choix entre 14 et 20 mm de diamètre.

5. Plaque à excroissances selon l'une des revendications précédentes, **caractérisée par** une découpe rectangulaire de la plaque à excroissances (1), sachant que sur deux des quatre bords de la plaque à excroissances (1) sont agencées des excroissances de jonction plus petites et que les excroissances (3) sont de géométrie creuse, de sorte à permettre d'empiler, par leurs excroissances (3), des plaques (1) à excroissances du même type sur les excroissances de jonction et de créer ainsi un ensemble de plaques (1) à excroissances mécaniquement lié.
